# EUROPEAN PATENT APPLICATION

(11) **EP 4 729 659 A1**
(43) Date of publication of application: **22.04.2026**
(21) Application number: 24858561.4
(22) Date of filing: 27.08.2024
(51) Int. Cl.: C25B 11/036, C25B 1/04

(54) **BIPOLAR PLATE, END PLATE AND ALKALINE ELECTROLYZER**

(30) Priority: 28.08.2023 CN 202322307789 U
(71) Applicant: Hydotech Hydrogen Energy Technology Co., Ltd., Nanjing, Jiangsu 211806 (CN)
(72) Inventor: YAO, Changsheng, Nanjing, Jiangsu 211806 (CN); GU, Junjie, Nanjing, Jiangsu 211806 (CN); LIU, Kai, Nanjing, Jiangsu 211806 (CN); HAN, Feng, Nanjing, Jiangsu 211806 (CN); LIU, Yubo, Nanjing, Jiangsu 211806 (CN)
(74) Representative: Ran, Handong
(86) International application number: PCT/CN2024/114768
(87) International publication number: WO 2025/045025

(57) **Abstract**

The present application provides a bipolar plate, an end plate and an alkaline electrolyzer. The positions of a first alkali liquor inlet through hole group and a second alkali liquor inlet through hole group are rationally arranged at the bottom of an electrode frame, such that when the bipolar plate is applied to the alkaline electrolyzer, alkali liquor firstly enters a first alkali liquor inlet channel formed by first through holes of the first alkali liquor inlet through hole group and a second alkali liquor inlet channel formed by first through holes of the second alkali liquor inlet through hole group from one end of the alkaline electrolyzer. After arriving at the other end of the alkaline electrolyzer, the alkali liquor enters individual electrolysis cells from second through holes of the first alkali liquor inlet through hole group and second through holes of the second alkali liquor inlet through hole group, so as to realize uniform distribution of the alkali liquor, and solves the problem of the uneven distribution of the alkali liquor caused by the excess length of an electrolyzer body of a large alkaline electrolyzer, thus preventing the operating conditions of the alkaline electrolyzer from getting worse, improving the efficiency of hydrogen production, and finally achieving the purpose of saving the electric energy consumption of the alkaline electrolyzer.

## Description

### Cross reference to related applications

This application claims priority to the Chinese patent application with application number 202322307789.2, titled "Bipolar plates, end plates, and alkaline electrolyzers", filed with the China National Intellectual Property Administration on August 28, 2023. The entire contents of that application are incorporated herein by reference.

### Technical field

This application relates to the technical field of hydrogen production by water electrolysis, and in particular, to a bipolar plate, an end plate, and an alkaline electrolyzer.

### Background Art

As an important part of clean energy, hydrogen energy is undergoing a period of rapid industrial development. The water electrolysis hydrogen production devices suitable for it are being developed towards large-scale. Currently, the method of electrolyzing water is generally used to produce hydrogen. Alkaline electrolyzers are the key equipment for water electrolysis hydrogen production. With the increase in the scale of hydrogen production, alkaline electrolyzers are also gradually developing towards large-scale.

Industrial alkaline electrolyzers are generally composed of multiple stacked electrolysis chambers, and a single alkaline solution inlet provides the required alkaline solution. This liquid supply structure is suitable for small and medium-sized alkaline electrolyzers. However, as alkaline water electrolyzers become larger, the end face diameter of the alkaline electrolyzer also increases, which will inevitably greatly increase the number of electrolysis chambers and make the alkaline electrolyzer body longer. Although a single alkaline solution inlet can provide the amount of alkaline solution for hydrogen production, it cannot ensure uniform heat and mass transfer distribution during the alkaline solution circulation. The increase in the number of electrolysis chambers leads to a worse uniformity of the flow field inside the alkaline electrolyzer, a greater temperature difference among the electrolysis chambers, an increased resistance to the flow of the electrolyte, and a worse operating state of the alkaline electrolyzer. Therefore, as the volume of the electrolyzer body increases, the phenomena of uneven internal temperature and uneven mass transfer in the alkaline electrolyzer become more significant.

### Disclosure of the Invention

The purpose of this application is to provide a bipolar plate, an end plate, and an alkaline electrolyzer to solve the technical problems in the prior art that the large-scale development of alkaline electrolyzers will inevitably greatly increase the number of electrolysis chambers. The more the number of electrolysis chambers increases, the longer the alkaline electrolyzer body becomes, which leads to a worse uniformity of the flow field inside the alkaline electrolyzer and a worse operating state of the alkaline electrolyzer.

To achieve the above purpose, this application provides a bipolar plate, including:

A bipolar plate body, which has a square structure and includes an anode surface and a cathode surface arranged oppositely; an electrode frame, which is fixedly arranged around the bipolar plate; a first alkaline solution inlet through-hole group and a second alkaline solution inlet through-hole group, both of which are arranged at the lower part of the electrode frame and pass through the lower part of the electrode frame along the thickness direction of the electrode frame. Each alkaline solution inlet through-hole group includes a first through-hole and a second through-hole. The second through-hole of the first alkaline solution inlet through-hole group is communicated to the anode surface, and the first through-hole of the first alkaline solution inlet through-hole group is not communicated to the bipolar plate body; the second through-hole of the second alkaline solution inlet through-hole group is communicated to the cathode surface, and the first through-hole of the second alkaline solution inlet through-hole group is not communicated to the bipolar plate body; and a first gas-liquid mixing through-hole and a second gas-liquid mixing through-hole, both of which are arranged at the upper part of the electrode frame and pass through the upper part of the electrode frame along the thickness direction of the electrode frame. The first gas-liquid mixing through-hole is communicated to the anode surface, and the second gas-liquid mixing through-hole is communicated to the cathode surface.

Optionally, in the bipolar plate, the second through-holes of the first alkaline solution inlet through-hole group and the anode surface, the second through-holes of the second alkaline solution inlet through-hole group and the cathode surface, the first gas-liquid mixing through-hole and the anode surface, and the second gas-liquid mixing through-hole and the cathode surface are all communicated through a communication groove.

Optionally, in the bipolar plate, the shape of the communication groove is any one of a rectangle, a waist shape, and a funnel shape.

Optionally, in the bipolar plate, the line connecting the center of the communication groove at the upper part of the cathode surface and the center of the communication groove at the lower part intersects with the side edge of the electrode frame.

Optionally, in the bipolar plate, the number of groups of the first alkaline solution inlet through-hole group is not less than the number of the first gas-liquid mixing through-holes; the number of groups of the second alkaline solution inlet through-hole group is not less than the number of the second gas-liquid mixing through-holes.

Optionally, in the bipolar plate, the first gas-liquid mixing through-holes and the second gas-liquid mixing through-holes are alternately arranged at the upper part of the electrode frame.

Optionally, in the bipolar plate, the number of groups of the first alkaline solution inlet through-hole group is the same as that of the second alkaline solution inlet through-hole group, and they are alternately arranged.

On the other hand, the present application also provides an end plate, including a first end plate and a second end plate. The first end plate is equipped with an alkaline solution inlet corresponding to the first through-hole in the bipolar plate described above, a first gas-liquid mixture outlet corresponding to the first gas-liquid mixture through-hole in the bipolar plate, and a second gas-liquid mixture outlet corresponding to the second gas-liquid mixture through-hole in the bipolar plate. The alkaline solution inlet is arranged at the lower part of the first end plate, and the first gas-liquid mixture outlet and the second gas-liquid mixture outlet are arranged at the upper part of the first end plate. At the bottom of the second end plate, there is a first groove corresponding to the first alkaline solution inlet through-hole group in the bipolar plate and a second groove corresponding to the second alkaline solution inlet through-hole group in the bipolar plate.

Optionally, in the end plate, the first gas-liquid mixture outlet and the second gas-liquid mixture outlet are alternately arranged at the upper part of the first end plate.

In yet another aspect, the present application also provides an alkaline electrolyzer, including a plurality of the above-mentioned bipolar plates, the above-mentioned end plate, a diaphragm, and an anode plate and a cathode plate arranged oppositely. The plurality of bipolar plates is arranged in parallel at intervals between the anode plate and the cathode plate, and one diaphragm is arranged between every two bipolar plates. The first alkaline solution inlet through-hole groups of the plurality of bipolar plates are communicated with the first groove on the second end plate to form a first alkaline solution inlet channel, and the second alkaline solution inlet through-hole groups of the plurality of bipolar plates are communicated with the second groove on the second end plate to form a second alkaline solution inlet channel. An anodic electrolysis chamber is formed between the anode surface of the bipolar plate and the diaphragm, and a cathodic electrolysis chamber is formed between the cathode surface of the bipolar plate and the diaphragm.

Compared with the prior art, the present application provides a bipolar plate. By reasonably arranging the positions of the first alkaline solution inlet through-hole group and the second alkaline solution inlet through-hole group at the bottom of the electrode frame, when the bipolar plate is applied to an alkaline electrolyzer, the alkaline solution first enters the first alkaline solution inlet channel formed by the first through-holes of the first alkaline solution inlet through-hole group and the second alkaline solution inlet channel formed by the first through-holes of the second alkaline solution inlet through-hole group from one end of the alkaline electrolyzer respectively. After reaching the other end of the alkaline electrolyzer, the alkaline solution then enters each small electrolysis chamber through the second through-holes of the first alkaline solution inlet through-hole group and the second through-holes of the second alkaline solution inlet through-hole group, so as to achieve uniform distribution of the alkaline solution and solve the problem of uneven alkaline solution distribution caused by the over-long tank body of a large-scale alkaline electrolyzer. Thus, the deterioration of the operating state of the alkaline electrolyzer is prevented, the hydrogen production efficiency is improved, and the purpose of saving the power consumption of the alkaline electrolyzer is finally achieved.

### Brief Description of the Drawings

Fig. 1 is a three-dimensional structural diagram of a bipolar plate provided in an embodiment of the present application.
Fig. 2 is a structural diagram of an anode surface of a bipolar plate provided in an embodiment of the present application;
Fig. 3 is a structural diagram of a cathode surface of a bipolar plate provided in an embodiment of the present application;
Fig. 4 is a schematic structural diagram of a first end plate provided in an embodiment of the present application;
Fig. 5 is a schematic structural diagram of a second end plate provided in an embodiment of the present application;
Fig. 6 is a schematic structural diagram of an alkaline electrolyzer provided in an embodiment of the present application.

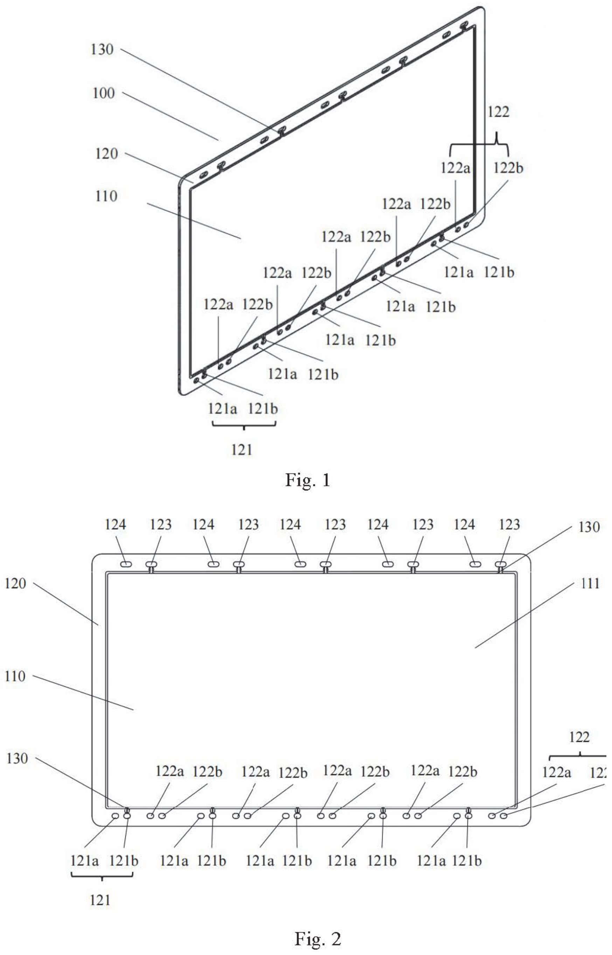

Among them, the reference numerals in Figs. 1 to 6 are explained as follows:
100-Bipolar plate; 110-Bipolar plate body; 111-Anode surface; 112-Cathode surface; 120-Electrode frame; 121-First alkaline solution inlet through-hole group; 121a-First through-hole of the first alkaline solution inlet through-hole group; 121b-Second through-hole of the first alkaline solution inlet through-hole group; 122-Second alkaline solution inlet through-hole group; 122a-First through-hole of the second alkaline solution inlet through-hole group; 122b-Second through-hole of the second alkaline solution inlet through-hole group; 123-First gas-liquid mixing through-hole; 124-Second gas-liquid mixing through-hole; 130-Communication groove; 210-First end plate; 211-First gas-liquid mixing outlet; 212-Second gas-liquid mixing outlet; 213-Alkaline solution inlet; 220-Second end plate; 221-First groove; 222-Second groove; 300-Anode plate; 400-Cathode plate; 500-First alkaline solution inlet channel; 600-Second alkaline solution inlet channel.

### Detailed Description of the Invention

To make the purpose, advantages and features of this application clearer, the bipolar plate, end plate and alkaline electrolyzer proposed in this application will be described in further detail below with reference to Figs. 1-6. It should be noted that the drawings are in a very simplified form and use non-precise scales, which are only used to conveniently and clearly assist in explaining the purpose of the embodiments of this application.

To facilitate the understanding of this application, this application will be described in more detail below with reference to the drawings and specific examples.

It should be understood that when used in the specification of this application and the appended claims, the term "comprising" indicates the presence of the described features, wholes, steps, operations, elements and/or components, but does not exclude the presence or addition of one or more other features, wholes, steps, operations, elements, components and/or their collections.

It should also be understood that the term "and/or" used in the specification of this application and the appended claims refers to any combination and all possible combinations of one or more of the associated listed items, and includes these combinations.

In the description of the specification of this application and the appended claims, terms such as "first" and "second" are only used for distinguishing descriptions and cannot be understood as indicating or implying relative importance.

References to "one embodiment" or "some embodiments" etc. described in the specification of this application mean that one or more embodiments of this application include specific features, structures, or characteristics described in conjunction with that embodiment. Therefore, statements such as "in one embodiment", "in some embodiments", "in some other embodiments", "in still other embodiments" etc. appearing in different places in this specification do not necessarily all refer to the same embodiment, but rather mean "one or more but not all embodiments", unless specifically emphasized otherwise in some other way. The terms "include", "comprise", "have" and their variations all mean "including but not limited to", unless specifically emphasized otherwise in some other way.

It should be noted that the orientations mentioned in the following embodiments are all based on the placement of the alkaline electrolyzer in the working state.

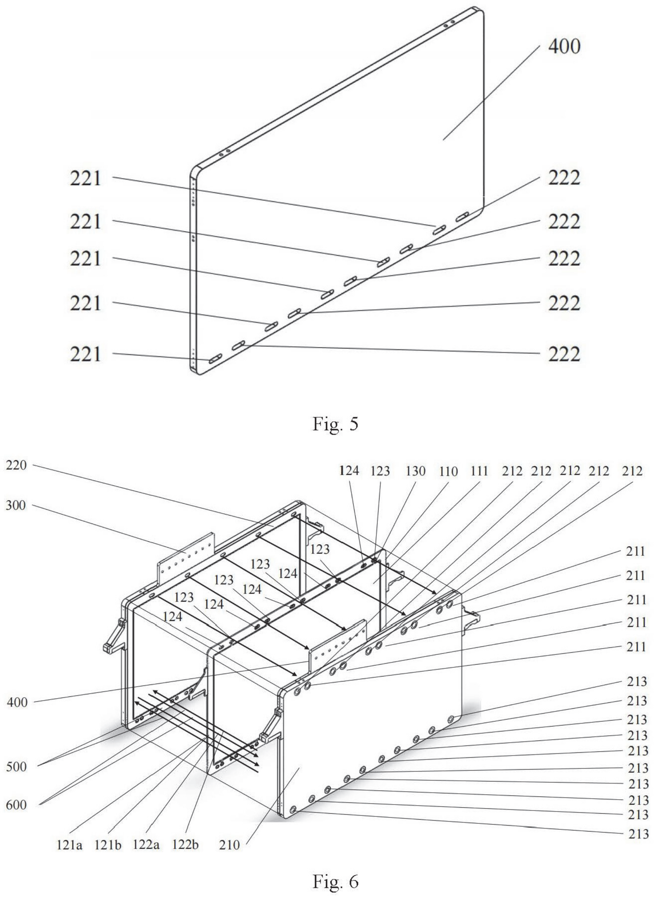

Refer to Figs. 1-3, combined with Fig. 6. This application provides a bipolar plate 100, including: a bipolar plate body 110, a frame 120, a first alkaline solution inlet through-hole group 121, a second alkaline solution inlet through-hole group 122, a first gas-liquid mixing through-hole 123, and a second gas-liquid mixing through-hole 124. The bipolar plate body 110 has a square structure and includes an anode surface 111 and a cathode surface 112 that are oppositely arranged. The electrode frame 120 is fixedly arranged around the bipolar plate 100. Both the first alkaline solution inlet through-hole group 121 and the second alkaline solution inlet through-hole group 122 are arranged at the lower part of the electrode frame 120 and pass through the lower part of the electrode frame 120 along the thickness direction of the electrode frame 120. Each alkaline solution inlet through-hole group includes a first through-hole and a second through-hole; the second through-hole 121b of the first alkaline solution inlet through-hole group is communicated to the anode surface 111, and the first through-hole 121a of the first alkaline solution inlet through-hole group is not communicated to the bipolar plate body 110, that is, there is no communication between the first through-hole 121a of the first alkaline solution inlet through-hole group and the bipolar plate body 110. The second through-hole 122b of the second alkaline solution inlet through-hole group is communicated to the cathode surface 112, and the first through-hole 122a of the second alkaline solution inlet through-hole group is not communicated to the bipolar plate body 110, that is, there is no communication between the first through-hole 122a of the second alkaline solution inlet through-hole group and the bipolar plate body 110. Both the first gas-liquid mixing through-hole 123 and the second gas-liquid mixing through-hole 124 are arranged at the upper part of the electrode frame 120 and pass through the upper part of the electrode frame 120 along the thickness direction of the electrode frame 120. Among them, the first gas-liquid mixing through-hole 123 is communicated to the anode surface 111. The second gas-liquid mixing through-hole 124 is communicated to the cathode surface 112.

Through the above technical solution, by reasonably arranging the positions of the first alkaline solution inlet through-hole group 121 and the second alkaline solution inlet through-hole group 122 at the bottom of the electrode frame 120, when the bipolar plate 100 is applied to an alkaline electrolyzer, the alkaline solution first enters the first alkaline solution inlet channel 500 formed by the first through-hole 121a of the first alkaline solution inlet through-hole group and the second alkaline solution inlet channel 600 formed by the first through-hole 122a of the second alkaline solution inlet through-hole group from one end of the alkaline electrolyzer respectively. After reaching the other end of the alkaline electrolyzer, it then enters each electrolysis chamber through the second through-hole 121b of the first alkaline solution inlet through-hole group and the second through-hole 122b of the second alkaline solution inlet through-hole group to achieve uniform distribution of the alkaline solution, thus solving the problem of uneven distribution of the alkaline solution caused by the excessive length of the large-scale alkaline electrolyzer. This prevents the operating state of the alkaline electrolyzer from deteriorating, improves the hydrogen production efficiency, and ultimately achieves the purpose of saving the power consumption of the alkaline electrolyzer.

Specifically, by arranging the first alkaline solution inlet through-hole group 121 and the second alkaline solution inlet through-hole group 122 at the lower part of the electrode frame 120 of the bipolar plate 100 of the alkaline electrolyzer, the second through-hole 121b and the first through-hole 121a of the first alkaline solution inlet through-hole group form a U-shaped liquid-inlet channel, and the alkaline solution enters the cathode electrolysis chamber through the second through-hole 121b. The second through-hole 122b and the first through-hole 122a of the second alkaline solution inlet through-hole group form a U-shaped liquid-inlet channel, and the alkaline solution enters the anode electrolysis chamber through the second through-hole 122b. In this way, the cathode electrolysis chamber and the anode electrolysis chamber corresponding to the cathode surface 112 and the anode surface 111 of the bipolar plate 100 are equivalently divided into multiple liquid-inlet areas, which can improve the liquid-inlet efficiency. This avoids problems such as insufficient water electrolysis in some areas caused by the uneven flow field inside the alkaline electrolyzer, local failure of the bipolar plate body 110, reduction of the electrolysis efficiency and service life of the alkaline electrolyzer.

It should be noted that the aforementioned "the second through-holes 121b of the first alkaline solution inlet through-hole group" and "the second through-holes 122b of the second alkaline solution inlet through-hole group" are respectively opened on both sides of the electrode frame 120 in a one-to-one correspondence, and they are not communicated to each other. Their main function is to respectively deliver the alkaline solution introduced into the U-shaped liquid inlet channel formed along the axial direction to the electrolysis chambers on both sides of the bipolar plate 100, and prevent mutual interference between the two electrolysis chambers on both sides of the bipolar plate 100 during this process, which may affect the electrolysis reaction therein.

The second through-holes 121b of the first alkaline solution inlet through-hole group and the anode surface 111, the second through-holes 122b of the second alkaline solution inlet through-hole group and the cathode surface 112, the first gas-liquid mixing through-hole 123 and the anode surface 111, and the second gas-liquid mixing through-hole 124 and the cathode surface 112 are all communicated through the communication grooves 130. Specifically, the shape of the communication groove 130 is any one of a rectangle, a waist shape and a funnel shape. It should be noted that this is not to limit the shape of the communication groove 130. As long as the shape enables the gas-liquid two-phase flow to enter the first gas-liquid mixing through-hole 123 and the second gas-liquid mixing through-hole 124 rapidly through the communication groove 130, and enables the alkaline solution in the first alkaline solution inlet through-hole group 121 and the second alkaline solution inlet through-hole group 122 to enter the anode electrolysis chamber and the cathode electrolysis chamber more evenly.

Specifically, the line connecting the center of the communication groove 130 at the upper part of the cathode surface and the center of the communication groove 130 at the lower part intersects with the side edge of the electrode frame 120. This can prevent the alkaline solution entering from the bottom from directly flowing out of the corresponding gas-liquid mixing through-holes, thus avoiding the occurrence of uneven diffusion.

The number of groups of the first alkaline solution inlet through-hole group 121 is not less than the number of the first gas-liquid mixing through-holes 123; the number of groups of the second alkaline solution inlet through-hole group 122 is not less than the number of the second gas-liquid mixing through-holes 124. That is to say, the number of alkaline solution inlet ports in each anode electrolysis chamber and each cathode electrolysis chamber is greater than or equal to the number of alkaline solution outlet ports, so as to ensure the alkaline solution balance in the electrolysis chambers.

The first gas-liquid mixing through-holes 123 and the second gas-liquid mixing through-holes 124 are alternately arranged on the upper part of the electrode frame 120. Through the alternating arrangement, the arrangement of the first gas-liquid mixing through-holes 123 and the second gas-liquid mixing through-holes 124 on the upper part of the electrode frame 120 can be more uniform.

The number of groups of the first alkaline solution inlet through-hole group 121 is the same as that of the second alkaline solution inlet through-hole group 122, and they are alternately arranged. Through the alternating arrangement, the arrangement of the first alkaline solution inlet through-hole group 121 and the second alkaline solution inlet through-hole group 122 on the lower part of the electrode frame 120 can be more uniform.

By alternately arranging the first gas-liquid mixing through-holes 123 and the second gas-liquid mixing through-holes 124 in the upper part of the electrode frame 120, and by having the same number of groups of the first alkaline solution inlet through-hole groups 121 and the second alkaline solution inlet through-hole groups 122 and arranging them alternately, a dynamic balance of the liquid inlet and outlet in the cathode electrolysis chamber and the anode electrolysis chamber is achieved.

Specifically, the number of groups of the first alkaline solution inlet through-hole groups 121 and the second alkaline solution inlet through-hole groups 122 is not less than 5. Then, the corresponding number of the first gas-liquid mixing through-holes 123 and the second gas-liquid mixing through-holes 124 is also not less than 5. Of course, the number of groups of the first alkaline solution inlet through-hole groups 121 and the second alkaline solution inlet through-hole groups 122 can also be 8, 10, 12, etc. The specific number can be determined according to the bipolar plates 100 of different sizes.

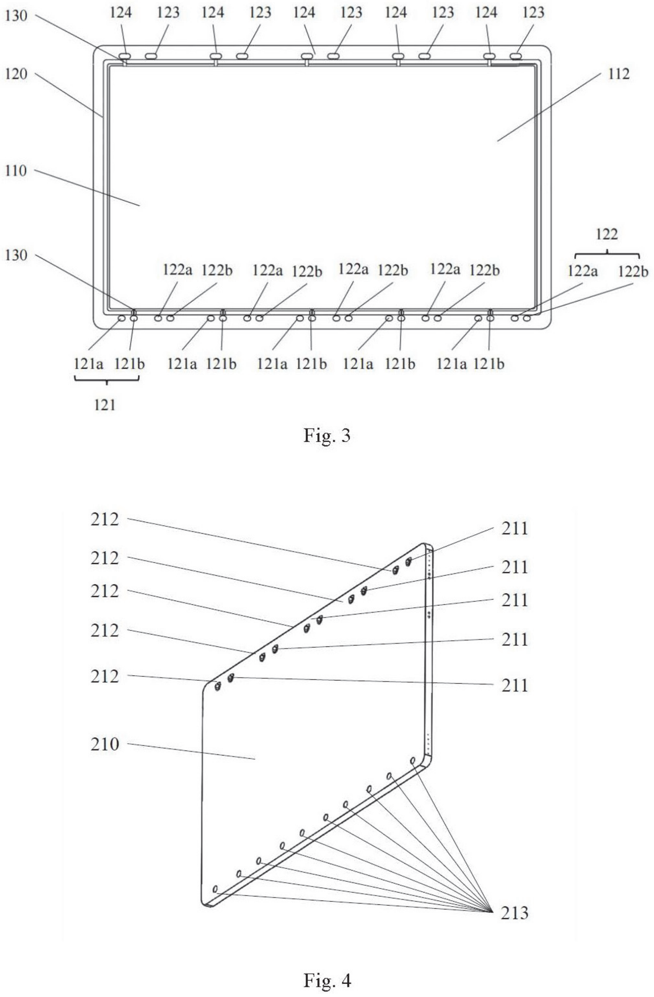

Please refer to Figs. 4-5 in combination with Figs. 1-3. On the other hand, this application also provides an end plate, which includes a first end plate 210 and a second end plate 220. On the first end plate 210, there are an alkaline solution inlet 213 corresponding to the first through-holes in the above-mentioned bipolar plate 100, a first gas-liquid mixing outlet 211 corresponding to the first gas-liquid mixing through-holes 123 in the bipolar plate 100, and a second gas-liquid mixing outlet 212 corresponding to the second gas-liquid mixing through-holes 124 in the bipolar plate 100. Among them, the alkaline solution inlet 213 is arranged at the lower part of the first end plate 210, and the first gas-liquid mixing outlet 211 and the second gas-liquid mixing outlet 212 are arranged at the upper part of the first end plate. At the bottom of the second end plate 220, there are a first groove 221 corresponding to the first alkaline solution inlet through-hole groups 121 in the bipolar plate 100 and a second groove 222 corresponding to the second alkaline solution inlet through-hole groups 122 in the bipolar plate 100.

The first groove 221 communicates the second through-holes 121b and the first through-holes 121a of the first alkaline solution inlet through-hole groups, so that the second through-holes 121b and the first through-holes 121a of all the first alkaline solution inlet through-hole groups in the alkaline electrolyzer are communicated to form a first alkaline solution inlet channel 500. The second groove 222 communicates the second through-holes 122b and the first through-holes 122a of the second alkaline solution inlet through-hole groups, so that the second through-holes 122b and the first through-holes 122a of all the second alkaline solution inlet through-hole groups in the alkaline electrolyzer are communicated to form a second alkaline solution inlet channel 600.

The first gas-liquid mixing outlet 211 and the second gas-liquid mixing outlet 212 are alternately arranged in the upper part of the first end plate 210.

Please refer to Fig. 6. On the other hand, this application also provides an alkaline electrolyzer, which includes a plurality of the above-mentioned bipolar plates 100, the above-mentioned end plates, a diaphragm (not shown in the figure), and an anode plate 300 and a cathode plate 400 arranged oppositely. The plurality of bipolar plates 100 is arranged in parallel at intervals between the anode plate 300 and the cathode plate 400, and a diaphragm is arranged between every two bipolar plates 100. The first alkaline solution inlet through-hole groups 121 of the plurality of bipolar plates 100 are communicated to the first grooves 221 on the second end plate 220 to form a first alkaline solution inlet channel 500, and the second alkaline solution inlet through-hole groups 122 of the plurality of bipolar plates 100 are communicated to the second grooves 222 on the second end plate 220 to form a second alkaline solution inlet channel 600. Among them, an anode electrolysis chamber is formed between the anode surface 111 of the bipolar plate 100 and the diaphragm, and a cathode electrolysis chamber is formed between the cathode surface 112 of the bipolar plate 100 and the diaphragm.

The path for the alkaline solution to enter the electrolysis chambers is as follows: The alkaline solution first enters, from one end of the alkaline electrolyzer, the first alkaline solution inlet channels 500 formed by the first through-holes 121a of the first alkaline solution inlet through-hole group and the first alkaline solution inlet channels 500 and the second alkaline solution inlet channels 600 formed by the first through-holes 122a of the second alkaline solution inlet through-hole group. After reaching the other end of the alkaline electrolyzer, it then enters each electrolysis chamber through the second through-holes 121b of the first alkaline solution inlet through-hole group and the second through-holes 122b of the second alkaline solution inlet through-hole group. This achieves uniform distribution of the alkaline solution, solving the problem of uneven alkaline solution distribution in large-scale alkaline electrolyzers caused by the excessive length of its body. Thus, it prevents the deterioration of the operating state of the alkaline electrolyzer, improves the hydrogen production efficiency, and ultimately achieves the goal of saving the power consumption of the alkaline electrolyzer.

It should be noted that the first end plate 210 is arranged close to the negative electrode plate 400. That is to say, the alkaline solution inlet 213 of the alkaline electrolyzer is set at the cathode end of the alkaline electrolyzer. The first gas-liquid mixture outlet 211 and the second gas-liquid mixture outlet 212 are also set at the cathode end of the alkaline electrolyzer. This can reduce current loss, thereby improving the hydrogen production efficiency.

The above description is only for the preferred embodiments of the present application and does not impose any limitation on the scope of the present application. Any changes or modifications made by those of ordinary skill in the field of the present application based on the above-disclosed content fall within the protection scope of the claims.

## Claims

1. A bipolar plate, comprising:
a bipolar plate body, which has a square structure and comprises an anode surface and a cathode surface that are oppositely arranged;
an electrode frame, which is fixedly arranged around the bipolar plate;
first alkaline solution inlet through-hole groups and second alkaline solution inlet through-hole groups, which are all arranged at a lower part of the electrode frame and pass through the lower part of the electrode frame along a thickness direction of the electrode frame, each of the first alkaline solution inlet through-hole groups and the second alkaline solution inlet through-hole groups comprising a first through-hole and a second through-hole, wherein:
the second through-hole of each of the first alkaline solution inlet through-hole groups is in communication with the anode surface, while the first through-hole of each of the first alkaline solution inlet through-hole groups is not in communication with the bipolar plate body; and
the second through-hole of each of the second alkaline solution inlet through-hole groups is in communication with the cathode surface, while the first through-hole of each of the second alkaline solution inlet through-hole groups is not in communication with the bipolar plate body; and
first gas-liquid mixing through-holes and second gas-liquid mixing through-holes, which are all arranged at an upper part of the electrode frame and pass through the upper part along the thickness direction of the electrode frame, wherein each of the first gas-liquid mixing through-holes is in communication with the anode surface, and each of the second gas-liquid mixing through-holes is in communication with the cathode surface.

2. The bipolar plate according to claim 1, wherein the second through-hole of each of the first alkaline solution inlet through-hole groups and the anode surface, the second through-hole of each of the second alkaline solution inlet through-hole groups and the cathode surface, each of the first gas-liquid mixing through-holes and the anode surface, and each of the second gas-liquid mixing through-holes and the cathode surface are in communication with each other through respective communication grooves.

3. The bipolar plate according to claim 2, wherein the communication grooves each have a shape of any one of a rectangle, an oblong shape, and a funnel shape.

4. The bipolar plate according to claim 2, wherein a line connecting a center of any one of the communication grooves at an upper part of the cathode surface and a center of any one of the communication grooves at a lower part of the cathode surface intersects with a side edge of the electrode frame.

5. The bipolar plate according to claim 1, wherein:
the number of the first alkaline solution inlet through-hole groups is not less than the number of the first gas-liquid mixing through-holes; and
the number of the second alkaline solution inlet through-hole groups is not less than the number of the second gas-liquid mixing through-holes.

6. The bipolar plate according to claim 1, wherein the first gas-liquid mixing through-holes and the second gas-liquid mixing through-holes are alternately arranged at the upper part of the electrode frame.

7. The bipolar plate according to claim 1, wherein the number of the first alkaline solution inlet through-hole groups is equal to the number of the second alkaline solution inlet through-hole groups, and the first alkaline solution inlet through-hole groups and the second alkaline solution inlet through-hole groups are alternately arranged.

8. An end plate, comprising:
a first end plate; and
a second end plate, wherein:
the first end plate is provided with alkaline solution inlets corresponding to the first through-holes in the bipolar plate according to any one of claims 1-7, first gas-liquid mixing outlets corresponding to the first gas-liquid mixing through-holes in the bipolar plate, and second gas-liquid mixing outlets corresponding to the second gas-liquid mixing through-holes in the bipolar plate, wherein the alkaline solution inlets are arranged at a lower part of the first end plate, and the first gas-liquid mixing outlets and the second gas-liquid mixing outlets are arranged at an upper part of the first end plate; and
the second end plate is provided at a bottom thereof with first grooves corresponding to the first alkaline solution inlet through-hole groups in the bipolar plate and second grooves corresponding to the second alkaline solution inlet through-hole groups in the bipolar plate.

9. The end plate according to claim 8, wherein the first gas-liquid mixing outlets and the second gas-liquid mixing outlets are alternately arranged at the upper part of the first end plate.

10. An alkaline electrolyzer, comprising:
a plurality of bipolar plates according to any one of claims 1-7;
an end plate according to claim 8 or 9;
diaphragms; and
an anode plate and a cathode plate arranged opposite to each other,
wherein:
the plurality of bipolar plates are arranged in parallel and spaced apart between the anode plate and the cathode plate, and one diaphragm is arranged between every two bipolar plates;
the first alkaline solution inlet through-hole groups of the plurality of bipolar plates are in communication with respective ones of the first grooves on the second end plate to form first alkaline solution inlet channels; and
the second alkaline solution inlet through-hole groups of the plurality of bipolar plates are in communication with respective ones of the second grooves on the second end plate to form second alkaline solution inlet channels,
wherein an anodic electrolysis chamber is formed between the anode surface of each bipolar plate and a diaphragm, and a cathodic electrolysis chamber is formed between the cathode surface of each bipolar plate and a diaphragm.
